# FASCICULE DE BREVET EUROPEEN

(11) **EP 3 039 043 B1**
(45) Date de publication et mention de la délivrance du brevet: **08.05.2019**
(21) Numéro de dépôt: 14756069.2
(22) Date de dépôt: 29.08.2014
(51) Int. Cl.: C08C 19/22, C08K 5/17, B60C 1/00, C08L 7/00

(54) **CAOUTCHOUC NATUREL MODIFIÉ PAR UN ACIDE AMINÉ**
DURCH EINE AMINOSÄURE MODIFIZIERTER NATURKAUTSCHUK
NATURAL RUBBER MODIFIED BY AN AMINO ACID

(30) Priorité: 30.08.2013 FR 1358323
(43) Date de publication de la demande: 06.07.2016
(73) Titulaire: Compagnie Générale des Etablissements Michelin, 63000 Clermont-Ferrand (FR)
(72) Inventeur: FLEURY, Etienne, F-63040 Clermont-Ferrand Cedex 09 (FR)
(74) Mandataire: Gandon-Pain, Sylvie
(86) Numéro de dépôt international: PCT/EP2014/068395
(87) Numéro de publication internationale: WO 2015/028615

(56) Documents cités:
- EP-A1- 2 119 730
- US-A- 4 286 079
- US-A- 4 289 861
- KIZAWA M: "Natural rubber latex compsn. useful as adhesive - contains aminoacid or salt and is modified by heat treatment", WPI / THOMSON,, vol. 1980, no. 51, 6 novembre 1980 (1980-11-06), XP002724341,
- DONG L ET AL: "Low-rolling-resistance tire tread rubber composition includes natural rubber, butadiene rubber, carbon black, silica, zinc, and multifunctional processing auxiliary agent i.e. amino acid compound having mercapto group", WPI / THOMSON,, vol. 2014, no. 10, 1 mai 2013 (2013-05-01) , XP002724342,
- HATTORI T ET AL: "Rubber composition used for pneumatic tire, contains diene rubber, amino acid and white filler", WPI / THOMSON,, vol. 2009, no. 17, 29 janvier 2009 (2009-01-29), XP002724343,

## Description

La présente invention se rapporte à un procédé de préparation d'un caoutchouc naturel modifié, au caoutchouc naturel modifié ainsi obtenu et à une composition de caoutchouc, utilisable notamment pour la fabrication de pneumatiques, à base d'au moins un caoutchouc naturel modifié, d'une charge renforçante et d'un système de réticulation.

Une composition de caoutchouc renforcée par du noir de carbone ou une autre charge renforçante et destinée à la fabrication de pneumatique doit présenter des propriétés mécaniques et dynamiques spécifiques qui permettent au pneumatique d'obéir à un grand nombre d'exigences techniques.

Depuis que les économies de carburant et la nécessité de protéger l'environnement sont devenues une priorité, il s'est avéré nécessaire de produire des pneumatiques ayant une résistance au roulement réduite. L'abaissement de l'hystérèse d'une composition de caoutchouc est un descripteur d'une plus basse résistance au roulement pour les pneumatiques les comportant. Par ailleurs, le caoutchouc naturel est souvent utilisé dans le domaine des pneumatiques pour ses excellentes propriétés mécaniques. Pour atteindre l'objectif d'abaissement de l'hystérèse, de nombreuses solutions ont déjà été expérimentées. Il a notamment été proposé de modifier la structure du caoutchouc naturel au moyen d'agents de fonctionnalisation dans le but d'obtenir une bonne interaction entre caoutchouc naturel et charge que cette dernière soit du noir de carbone ou une autre charge renforçante.

Ainsi, par exemple, il est connu du document US 2009/0227742 un latex de caoutchouc naturel modifié par des groupes polaires soufrés.

Par ailleurs, dans le domaine des adhésifs, il est connu du document JP S55 142033, un caoutchouc naturel modifié par un acide aminé.

Diminuer davantage la résistance au roulement demeure dans le contexte économique et écologique actuel un souci permanent malgré les niveaux déjà atteints avec les différentes solutions de l'état de l'art.

Le problème que se propose de résoudre la présente invention est de trouver un caoutchouc naturel qui permet d'abaisser davantage l'hystérèse d'une composition de caoutchouc le contenant par rapport aux niveaux déjà atteints par des compositions de l'art antérieur, de manière à permettre d'atteindre une résistance au roulement encore diminuée des pneumatiques contenant cette composition.

Le but de la présente invention est de proposer un caoutchouc naturel modifié et son procédé de préparation permettant de préparer une composition faiblement hystérétique.

Ce but est atteint en ce que les inventeurs ont découvert qu'un procédé de modification d'un caoutchouc naturel au moyen d'un agent de modification spécifique comprenant au moins un acide aminé permet d'obtenir un caoutchouc naturel modifié qui confère à une composition le contenant des propriétés hystérétiques améliorées.

On entend dans la suite du texte par "taux d'agent de modification" présent dans une composition de caoutchouc, exprimé en pourcentage molaire, le nombre de molécules d'agent de modification présentes dans la composition pour cent motifs isoprèniques de la composition. Par exemple, si le taux d'agent de modification sur un caoutchouc naturel modifié est de 0,20% molaire, cela signifie qu'il y aura 0,20 moles d'agent de modification pour 100 moles de monomère.

On entend dans la suite du texte par "composition à base de" une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation.

Dans la présente description, sauf indication expresse différente, tous les pourcentages (%) indiqués sont des % en masse.

Dans la présente description, par « majoritairement » ou « majoritaire » en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, une charge dite majoritaire est celle représentant la plus grande fraction pondérale par rapport au poids totale de l'ensemble des charges de la composition. Dans un système comprenant un seul composé d'un certain type, celui-ci est majoritaire au sens de la présente invention.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention porte sur un procédé pour préparer un caoutchouc naturel modifié.

L'invention a également pour objet le caoutchouc naturel modifié.

L'invention a également pour objet une composition de caoutchouc à base
- d'au moins un caoutchouc naturel modifié,
- d'une ou plusieurs charges renforçantes, et
- d'un système de réticulation.

Un pneumatique comprenant une telle composition fait également l'objet de l'invention.

### Procédé de préparation du caoutchouc naturel modifié

Le procédé selon l'invention comprend
- une étape d'ajout en phase latex d'un agent de modification de formule (I) suivante, ainsi que ses sels, d'acide ou de base, organique ou minéral, ses isomères optiques ou géométriques et/ou ses solvates tels que les hydrates : 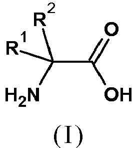 dans laquelle
   R₁ et R₂, indépendamment l'un de l'autre, désignent un atome d'hydrogène, un groupement polaire choisi parmi amino, imino, nitrile, ammonium, imide, amide, hydrazo, azo, diazo, thio, hydroxyle, carboxyle, carbonyle, époxy, oxycarbonyle, des groupes hétérocycliques comportant un ou plusieurs atomes d'azote, des groupes hétérocycliques comportant un ou plusieurs atomes d'oxygène, des groupes comportant de l'étain, des groupes alkoxysilyles, les groupements polaires étant portés par une chaîne alkyle, linéaire ou ramifiée, saturée ou insaturée en C₁-C₁₈,
   R1 et R2 ne pouvant designer ensembles un atome d'hydrogène ;
   à un caoutchouc naturel présentant un taux d'azote allant de 0 à 0,4% en poids par rapport au poids total du caoutchouc naturel séché,
- puis une étape de séchage.

### Le latex de caoutchouc naturel

Le latex de caoutchouc naturel (également noté NR pour Natural Rubber en langue anglaise) existe sous différentes formes comme le détaille par exemple le chapitre 3 " Latex concentrâtes: properties and composition ", de K.F. Gaseley, A.D.T. Gordon et T.D. Pendle dans "Naturel Rubber Science and Technology ", A.D. Roberts, Oxford University Press - 20 1988.

En particulier plusieurs formes de latex de caoutchouc naturel existent :
- les latex de caoutchouc naturel dits "de champ" ("field latex"),
- les latex traités ammoniaque,
- les latex de caoutchouc naturel dits "concentrés" ("concentrated natural rubber latex") ou centrifugés ("centrifugally concentrated latex"),
- les latex déprotéinisés, par exemple par traitement enzymatique ou par multi-centrufugation en présence d'un tensioactif,
- les latex prévulcanisés, ou encore,
- les latex autres qu'issus de l'hévéa : latex issus de la Gutta Percha, du Dandelion ou de la Guayule.

Le latex de caoutchouc naturel peut être préalablement modifié physiquement ou chimiquement.

Le latex de caoutchouc naturel utile selon la présente invention contient un taux d'azote allant de 0 à 0,4% en poids, voire au moins 0,05% et de préférence au plus de 0,3% en poids par rapport au poids total du caoutchouc naturel séché.

Par conséquent, le latex peut avoir subi préalablement à sa mise en oeuvre une déprotéinisation de manière connue en soi en vue de diminuer son taux d'azote pour atteindre le taux souhaité, par exemple par centrifugation ou bien par traitement enzymatique et/ou chimique.

### L'agent de modification

L'agent de modification est de formule (I) suivante, ainsi que ses sels, d'acide ou de base, organique ou minéral, ses isomères optiques ou géométriques et/ou ses solvates tels que les hydrates : 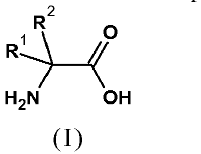 dans laquelle
R₁ et R₂, indépendamment l'un de l'autre, désignent un atome d'hydrogène, un groupement polaire choisi parmi amino, imino, nitrile, ammonium, imide, amide, hydrazo, azo, diazo, thio, hydroxyle, carboxyle, carbonyle, époxy, oxycarbonyle, des groupes hétérocycliques comportant un ou plusieurs atomes d'azote, des groupes hétérocycliques comportant un ou plusieurs atomes d'oxygène, , des groupes comportant de l'étain, des groupes alkoxysilyles, les groupements polaires étant portés par une chaîne alkyle, linéaire ou ramifiée, saturée ou insaturée en C₁-C₁₈,
R₁ et R₂ ne pouvant designer ensemble un atome d'hydrogène.

En tant que groupe amino, on peut citer l'aniline, l'éthylamino, propylamino, butylamino, N-méthylaminoéthyle, N-éthylaminoéthyle, N-méthylaminopropyle, N-éthylaminopropyle, N-méthylaminobutyle, N-éthylaminobutyle, N,N-diméthylaminoéthyle, N,N-diéthylaminoéthyle, N,N-diméthylaminopropyle, N,N-diéthylaminopropyle, N,N-diméthylaminobutyle, N,N-diéthylaminobutyle, guanidine.

En tant que groupe thiol, on peut citer les alkylthiols ainsi que leurs dimères.

En tant que groupe nitrile, on peut citer le propylnitrile et le butylnitrile.

En tant que groupe hydroxyle, on peut citer l'hydroxyéthyle, hydroxypropyle, l'hydroxybutyle, l'hydroxyhexyle, le dihydroxypropyle, l'hydroxybenzyle, l'hydroxyphényle.

En tant que groupe carboxylique, on peut citer l'acide acétique, propionique, salicylique, malonique, succinique, benzoïque.

En tant que groupe hétérocyclique comprenant un ou plusieurs atomes d'azote, on peut citer le pyrrole, histidine, imidazole, triazolidine, triazole, triazine, pyridine, pyrimidine, pyrazine, indole, quinoline, purine, phénazine, ptéridine et mélamine.

En tant que groupe comportant de l'étain, on peut citer le 2-éthyl tri-n-butylétain, 2-éthyl triméthylétain, 2-éthyl triphénylétain, 3-propyl tri-n-butylétain, 3-propyl triméthylétain, 3-propyl triphénylétain.

En tant que groupe comportant un alkoxysilyle, on peut citer le 3-propyl triméthoxysilane, 3-propyl triéthoxysilane, 3-propyl méthyl diméthoxysilane, 3-propyl diméthyl méthoxysilane, 2-éthyl triméthoxysilane, 2-éthyl triéthoxysilane, méthyl méthyl diéthoxysilane, méthyl triméthoxysilane.

De préférence, l'agent de modification est choisi parmi l'arginine, l'asparagine, l'aspartate, la cystéine, la cystine, le glutamate, l'histidine, la lysine, la méthionine, la sélénocystéine, la sérine, la thréonine, le tryptophane, la tyrosine.

Plus particulièrement, l'agent de modification est choisi parmi l'arginine et la cystine.

Le taux d'agent de modification ajouté au caoutchouc va de 0.05 à 2% en poids par rapport au poids de caoutchouc naturel sec.

L'adjonction au latex de l'agent de modification se fait :
- soit directement par ajout de l'agent de modification au latex de caoutchouc naturel ;
- soit, dans un premier temps, par mise en solution ou en mise en émulsion en présence d'un émulsifiant dans une solution aqueuse de l'agent de modification ; puis dans un deuxième temps, la solution ou l'émulsion est ajoutée au latex de caoutchouc naturel.

Le mélangeage se fait par agitation mécanique douce à température ambiante pendant 0,5 à 5 minutes.

La modification du caoutchouc naturel se fait par réaction de l'élastomère avec le ou les groupes réactifs portés par l'agent de modification lors de l'étape de séchage. Lors de cette réaction, ce ou ces groupes réactifs forment des liaisons covalentes avec la chaîne de l'élastomère. Afin de favoriser la réaction d'addition de l'agent de modification sur le caoutchouc naturel, le séchage s'effectue de préférence sous vide partiel avec un balayage d'un gaz inerte comme par exemple l'azote ou l'argon, à une température d'au moins 30°C. Cette étape peut être mise en oeuvre selon des conditions connues en soi pour le séchage de latex de caoutchouc naturel.

L'étape de séchage peut se faire sous azote ou sous air.

Lorsque l'étape de séchage se fait sous vide, elle se fait de préférence, à au moins 60°C pendant plusieurs heures, par exemple de 2 à 72 heures sous vide partiel et balayage azote.

Les températures de séchage sous air sont typiquement entre 40 et 150°C, préférentiellement entre 60 et 130°C ; le temps de séchage typiquement entre 10 min et 360 min, préférentiellement entre 20 min et 300 min.

L'invention porte sur le caoutchouc naturel modifié sec obtenu par le procédé tel que défini ci-dessus.

L'invention porte également sur un caoutchouc naturel modifié susceptible d'être obtenu par le procédé tel que défini ci-dessus.

L'invention porte également sur une composition de caoutchouc naturel modifié susceptible d'être obtenu par le procédé tel que défini ci-dessus.

### Composition de caoutchouc

La composition selon l'invention est à base
- d'au moins un caoutchouc naturel modifié tel que défini et préparé selon le procédé décrit ci-dessus,
- d'une ou plusieurs charges renforçantes, et
- d'un système de réticulation.

La composition de caoutchouc selon l'invention peut comprendre de préférence plus de 40 pce de caoutchouc naturel modifié ; plus préférentiellement encore le taux de caoutchouc naturel modifié est compris dans un domaine allant de 50 à 100 pce, en particulier dans un domaine allant de 70 à 100 pce. Le caoutchouc peut être constitué, selon l'invention, d'un mélange de plusieurs caoutchoucs naturels modifiés conformes à l'invention.

### Elastomère additionnel

La matrice élastomère présente dans la composition selon l'invention peut également, outre le caoutchouc naturel modifié selon l'invention, comprendre au moins un autre élastomère diénique. Dans le cas d'un coupage avec au moins un autre élastomère diénique, la fraction massique du caoutchouc naturel modifié selon l'invention dans la matrice élastomère est majoritaire et de préférence supérieure ou égale à 40% en masse de la masse totale de la matrice, encore plus préférentiellement supérieure ou égale 50% en masse de la masse totale de la matrice, encore plus préférentiellement supérieure ou égale 70%. Dans le cas d'un coupage avec au moins un autre élastomère diénique, la fraction massique du caoutchouc naturel modifié selon l'invention dans la matrice élastomère est majoritaire et de préférence inférieure ou égale à 85% en masse de la masse totale de la matrice. On appelle fraction massique majoritaire selon l'invention la fraction massique la plus élevée du coupage. Par élastomère diénique, doit être compris selon l'invention tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en masse d'unités diéniques, et de 1 à 80 % en masse d'unités vinylaromatiques. L'élastomère diénique constituant une partie de la matrice élastomère selon l'invention est choisi préférentiellement dans le groupe des élastomères diéniques fortement insaturés constitué par les polybutadiènes (BR), les copolymères de butadiène, les polyisoprènes (PI), les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène et d'un monomère vinylaromatique, plus particulièrement le copolymère de butadiène-styrène (SBR), sont particulièrement préférés.

Ces élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution.

Ces élastomères diéniques constituant une partie de la matrice élastomère selon l'invention peuvent être étoilés, couplés, fonctionnalisés ou non, de manière connue en soi, au moyen d'agents de fonctionnalisation, de couplage ou d'étoilage connus de l'homme de l'art.

Selon l'invention, la matrice élastomère de la composition est majoritairement à base de caoutchouc naturel modifié. Dans certains cas, la matrice élastomère peut avantageusement être entièrement constituée de caoutchouc naturel modifié (100% de la matrice élastomère est constituée de caoutchouc naturel modifié).

### Charge renforçante

Un autre composant de la composition selon l'invention est la charge renforçante.

On peut utiliser tout type de charge renforçante connue pour ses capacités à renforcer une composition de caoutchouc utilisable pour la fabrication de pneumatiques, par exemple du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, utilisés individuellement ou sous forme de mélanges, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage et de préférence après greffage (voir par exemple demandes WO 97/36724 ou WO 99/16600).

Comme charge inorganique renforçante autre que du noir de carbone, doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyles (-OH) à sa surface.

L'état physique sous lequel se présente la charge renforçante est indifférent, que ce soit sous forme de poudre, de microperles, de granulés, de billes ou toute autre forme densifiée appropriée. Bien entendu on entend également par charge renforçante des mélanges de différentes charges renforçantes, en particulier de charges siliceuses et/ou alumineuses hautement dispersibles telles que décrites ci-après.

Comme charges inorganiques renforçantes autre que du noir de carbone conviennent notamment des charges minérales du type siliceuse, en particulier de la silice (SiO₂), ou du type alumineuse, en particulier de l'alumine (Al₂O₃).

Selon l'invention, le taux de charge renforçante dans la composition est compris entre 10 et 200 pce, plus préférentiellement 30 et 150 pce, voire entre 50 et 120 pce. L'optimum est différent selon les applications particulières visées. Selon un mode de réalisation, la charge renforçante comprend majoritairement de la silice, de préférence le taux de noir de carbone présent dans la composition étant inférieur à 20 pce plus préférentiellement inférieur à 10 pce (par exemple entre 0.5 et 20 pce, notamment de 1 à 10 pce).

Selon un mode de réalisation préférentiel, la charge renforçante comprend majoritairement du noir de carbone, de préférence elle comprend préférentiellement plus de 50% en poids de noir de carbone par rapport au poids total de la charge, voire la charge renforçante est exclusivement constituée de noir de carbone.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Dans les compositions de caoutchouc comprises dans le pneumatique selon l'invention, la teneur en agent de couplage est préférentiellement comprise entre 0,5 et 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge; il est typiquement de l'ordre de 0,5% à 15% en poids par rapport à la quantité de charge inorganique renforçante autre que du noir de carbone.

L'homme du métier comprendra qu'à titre de charge équivalente de la charge inorganique renforçante autre que noir de carbone décrite dans le présent paragraphe, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition selon l'invention peut également contenir, en complément des agents de couplage, des activateurs de couplage de la charge renforçante ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru.

### Système de réticulation

Les compositions comprennent également un système de réticulation. Cette réticulation permet la formation de liaisons covalentes entre les chaînes d'élastomères. Elle peut se faire à base soit de soufre, soit de donneurs de soufre et/ou de peroxyde et/ou de bismaléimides, des accélérateurs de vulcanisation, des activateurs de vulcanisation.

Le système de vulcanisation proprement dit est préférentiellement à base de soufre et d'un accélérateur primaire de vulcanisation, en particulier d'un accélérateur du type sulfénamide, tel que choisi dans le groupe constitué par disulfure de 2- benzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

Le soufre est utilisé à un taux préférentiel compris entre 0,5 et 10 pce. L'ensemble des accélérateurs primaires, secondaires et activateurs de vulcanisation est utilisé à un taux préférentiel compris entre 0,5 et 10 pce.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple),

### Procédé de préparation de la composition de caoutchouc

Un autre objet de l'invention est le procédé de préparation de la composition de caoutchouc décrite ci-dessus.

La composition de caoutchouc selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation chimique.

De manière générale, tous les constituants de base de la composition comprise dans le pneumatique de l'invention, à l'exception du système de réticulation chimique, à savoir la ou les charges renforçantes, l'agent de couplage le cas échéant, sont incorporés de manière intime, par malaxage, au caoutchouc naturel modifié ou aux élastomères diéniques le cas échéant, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon l'invention, l'élastomère diénique, c'est-à-dire le caoutchouc naturel a été greffé par l'agent de modification préalablement à la fabrication de la composition de caoutchouc. Ainsi, c'est l'élastomère diénique modifié qui est introduit au cours de la première phase dite non-productive.

Ainsi selon ce mode de réalisation du procédé, celui-ci comprend les étapes suivantes:
- incorporer au caoutchouc naturel modifié par greffage de l'agent de modification, la charge renforçante et tous les constituants de base de la composition, à l'exception du système de réticulation, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure à 100°C,
- incorporer ensuite le système de réticulation chimique,
- malaxer le tout jusqu'à une température maximale inférieure à 120°C,
- et éventuellement, extruder ou calandrer la composition de caoutchouc ainsi obtenue.

L'invention a également pour objet un produit fini ou semi-fini en caoutchouc comprenant une composition de caoutchouc renforcée selon l'invention, plus particulièrement un produit fini ou semi-fini en caoutchouc pour pneumatique.

En raison de l'amélioration des propriétés d'hystérèse qui caractérisent une composition de caoutchouc renforcée selon l'invention, on notera qu'une telle composition peut constituer tout produit semi-fini du pneumatique et tout particulièrement la bande de roulement, diminuant notamment sa résistance au roulement.

L'invention a également pour objet un pneumatique qui incorpore dans au moins un de ses éléments constitutifs une composition de caoutchouc renforcée selon l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES DE REALISATION

### I. Mesures et tests utilisés

Les caoutchouc naturels modifiés et compositions de caoutchouc sont caractérisés, avant et après cuisson, comme indiqué ci-après.

### Détermination du taux d'azote

La détermination du taux d'azote est faite selon la norme Norme ISO 1656 :1996 basée sur la méthode de Kjeldahl. L'échantillon est minéralisé en milieu acide (H₂SO₄ concentré) en présence de catalyseur (K₂SO₄ et CuSO₄). L'azote organique est transformé en azote minéral par oxydation et destruction des molécules organiques. Le milieu est alcalinisé par ajout de NaOH et l'ammoniac libéré est entraîné à la vapeur d'eau par distillation. Les vapeurs d'ammoniac sont condensées au contact d'un réfrigérant et recueillies dans une quantité connue et en excès d'acide fort. L'excès d'acide est dosé par une solution titrée de soude en milieu aqueux.

### Propriétés dynamiques

Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente (60°C).

On effectue un balayage en amplitude de déformation de 0,1% à 100% (cycle aller), puis de 100% à 0,1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)max, ainsi que l'écart de module complexe (ΔG*) entre les valeurs à 0,1% et à 100% de déformation (effet Payne).

On rappelle que, de manière bien connue de l'homme du métier, la valeur de tanδ à 0°C est représentative du potentiel d'adhérence sur sol mouillé : plus tan(δ) à 0°C est élevée, meilleure est l'adhérence. La valeur de tan(δ) à 60°C est représentative de l'hystérèse du matériau donc de la résistance au roulement : plus tan(δ) à 60°C est faible, plus la résistance au roulement est réduite.

### II. Exemples de caoutchoucs : 1ère série d'essais

6 caoutchoucs différents sont préparés selon les conditions du tableau 1 ci-dessous :

**Tableau 1**

| | Source de latex | Agent de modification | Taux d'agent de modification (% poids) | Taux d'azote (% poids) |
|---|---|---|---|---|
| NR A-0 | Latex centrifugé×5 | - | - | 0.13 |
| NR A-1 | Latex centrifugé×5 | *L*-cystine | 0.2 | 0.13 |
| NR A-2 | Latex centrifugé×5 | *L*-arginine | 0.2 | 0.13 |
| NR B-0 | Latex Field | - | - | 0.75 |
| NR B-1 | Latex Field | *L*-cystine | 0.2 | 0.75 |
| NR B-2 | Latex Field | *L*-arginine | 0.2 | 0.75 |

Les caoutchoucs NR A-1 et A-2 sont selon l'invention. Les autres caoutchoucs sont des caoutchoucs comparatifs.

Deux agents de modification ont été utilisés pour préparer les caoutchoucs selon l'invention :
- la *L*-arginine, et
- la *L*-cystine.

### II-1. Préparation du caoutchouc comparatif NR A-0

Le caoutchouc NR A-0 est issu d'un latex de caoutchouc naturel qui a subi cinq centrifugations successives ayant été séché à 65°C sous vide partiel et balayage d'azote pendant 48h. Ce caoutchouc n'est pas greffé.

### II-2. Préparation des caoutchoucs selon l'invention NR A-1 et A-2

Les caoutchoucs NR A-1 et A-2 sont modifiés par ajout direct des quantités d'agents de modification indiquées dans le tableau 1 à un latex de caoutchouc naturel, suivi d'une agitation mécanique douce à température ambiante pendant deux minutes, puis d'un séchage à 65°C sous vide partiel et balayage d'azote pendant 48h.
Préalablement à la modification, les caoutchoucs naturels ont subi plusieurs centrifugations. De ce fait, leur taux d'azote avant modification est inférieur à 0.4% en poids.

### II-3. Préparation du caoutchouc comparatif NR B-0

Le caoutchouc NR B-0 résulte du séchage à 65°C sous vide partiel et balayage d'azote pendant 48h d'un latex de caoutchouc de champ. Il comporte un taux d'azote supérieur à celui requis pour les caoutchoucs de l'invention revendiquée.

### II-4. Préparation des caoutchoucs comparatifs NR B-1 et B-2

Les caoutchoucs NR B-1 et B-2 sont modifiés par ajout direct des quantités d'agents de modification indiquées dans le tableau 1 à un latex de caoutchouc de champ, suivi d'une agitation mécanique douce à température ambiante pendant deux minutes, puis d'un séchage à 65°C sous vide partiel et balayage d'azote pendant 48h.

### III. Exemples de compositions et résultats : 1ère série d'essais

Les caoutchoucs définis dans le tableau 1 ci-dessus sont utilisés pour la préparation de compositions ci-dessous.

On procède pour les essais qui suivent de la manière suivante: on introduit dans un mélangeur interne Polylab de 85cm³, rempli à 70% et dont la température initiale de cuve est d'environ 110°C, le caoutchouc naturel modifié ou non.

Ensuite, le noir de carbone puis, après une à deux minutes de malaxage, les divers autres ingrédients à l'exception du système de vulcanisation, sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre et accélérateur CBS) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

Les compositions de caoutchouc sont données dans le tableau 2. Les quantités sont exprimées en parties pour 100 parties en poids d'élastomère (pce).

**Tableau 2**

| | Exemple 1 | Exemple 2 | Exemple 3 | Exemple 4 | Exemple 5 | Exemple 6 |
|---|---|---|---|---|---|---|
| NR A-0 | 100 | - | - | - | - | - |
| NR A-1 | - | 100 | - | - | - | - |
| NR A-2 | - | - | 100 | - | - | - |
| NR B-0 | - | - | - | 100 | - | - |
| NR B-1 | - | - | - | - | 100 | - |
| NR B-2 | - | - | - | - | - | 100 |
| Noir de carbone (1) | 54 | 54 | 54 | 54 | 54 | 54 |
| Antioxydant (2) | 4 | 4 | 4 | 4 | 4 | 4 |
| Acide stéarique (3) | 1,5 | 1,5 | 1,5 | 1,5 | 1,5 | 1,5 |
| ZnO (4) | 3 | 3 | 3 | 3 | 3 | 3 |
| Paraffine | 1 | 1 | 1 | 1 | 1 | 1 |
| Soufre | 1,1 | 1,1 | 1,1 | 1,1 | 1,1 | 1,1 |
| Accélérateur (5) | 1,1 | 1,1 | 1,1 | 1,1 | 1,1 | 1,1 |
| ΔG* (0-100%) 60°C retour (MPa) | 1,77 | 1,09 | 1,49 | 4,12 | 5,16 | 5,45 |
| Tanδ_{maX} 60°C retour | 0,174 | 0,142 | 0,145 | 0,211 | 0,23 | 0,235 |

| | | | | | | |
|---|---|---|---|---|---|---|
| (1) N234 (2) 1,3-diméthylbutyl-N-phényl-para-phénylènediamine ("Santoflex 6-PPD" société Flexsys) (3) Stéarine ("Pristerene 4931" - société Uniqema) (4) oxyde de zinc (grade industriel - société Umicore) (5) N-cyclohexyl-2-benzothiazyl-sulfénamide ("Santocure CBS" société Flexys). | | | | | | |

Les résultats montrent une amélioration significative du tanδₘₐₓ à 60°C après modification (cystine ou arginine) d'un latex ayant un taux d'azote de 0.13% en poids.

De façon étonnante, il a été montré, que l'amélioration d'hystérèse n'est observée que si le latex de départ possède un faible taux d'azote.

### IV. Exemples de caoutchouc : 2^{nd} série d'essais

2 caoutchoucs différents sont préparés selon les conditions du tableau 3 ci-dessous :

**Tableau 3**

| | Source de latex | Agent de modification | Taux d'agent de modification | Taux d'azote |
|---|---|---|---|---|
| | | | (% poids) | (% poids) |
| NR C-1 | Latex centrifugé×2 | - | - | 0.16 |
| NR C-2 | Latex centrifugé×2 | *L*-cystine | 0.2 | 0.16 |

Le caoutchouc NR C-2 est selon l'invention. Le caoutchouc NR C-lest un caoutchouc comparatif.

Un agent de modification a été utilisé pour préparer le caoutchouc selon l'invention :
- la *L*-cystine.

### IV-1. Préparation du caoutchouc comparatif NR C-1

Le caoutchouc NR C-1 est issu d'un latex de caoutchouc naturel qui a subi deux centrifugations successives (nommé latex double centrifugé) ayant été séché à 120°C sous air pendant 5h. Ce caoutchouc n'est pas greffé.

### IV-2. Préparation du caoutchouc selon l'invention NR C-2

Le caoutchouc NR C-2 est modifié par ajout direct de la quantité d'agent de modification indiquée dans le tableau 3 à un latex de caoutchouc naturel double centrifugé, suivi d'une agitation mécanique douce à température ambiante pendant deux minutes, puis d'un séchage à 120°C sous air pendant 5h.

Préalablement à la modification, le caoutchouc naturel a subi deux centrifugations. De ce fait, leur taux d'azote avant modification est inférieur à 0.4% en poids.

### V. Exemples de compositions et résultats : 2^{nd} série d'essais

Les caoutchoucs définis dans le tableau 3 ci-dessus sont utilisés pour la préparation de compositions ci-dessous.

On procède pour les essais qui suivent de la manière suivante: on introduit dans un mélangeur interne Polylab de 85cm3, rempli à 70% et dont la température initiale de cuve est d'environ 110°C, le caoutchouc naturel modifié ou non.

Ensuite, le noir de carbone puis, après une à deux minutes de malaxage, les divers autres ingrédients à l'exception du système de vulcanisation, sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre et accélérateur CBS) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

Les compositions de caoutchouc sont données dans le tableau 4. Les quantités sont exprimées en parties pour 100 parties en poids d'élastomère (pce).

**Tableau 4**

| | Exemple n°7 | Exemple n°8 |
|---|---|---|
| NR C-1 | 100 | - |
| NR C-2 | - | 100 |
| Noir de carbone (1) | 54 | 54 |
| Antioxydant (2) | 4 | 4 |
| Acide stéarique (3) | 1,5 | 1,5 |
| ZnO (4) | 3 | 3 |
| Paraffine | 1 | 1 |
| Soufre | 1,1 | 1,1 |
| Accélérateur (5) | 1,1 | 1,1 |
| Tanδₘₐₓ 60°C retour | 0,199 | 0,172 |

| | | |
|---|---|---|
| (1) N234 (2) 1,3-diméthylbutyl-N-phényl-para-phénylènediamine ("Santoflex 6-PPD" société Flexsys) (3) Stéarine ("Pristerene 4931" - société Uniqema) (4) oxyde de zinc (grade industriel - société Umicore) (5) N-cyclohexyl-2-benzothiazyl-sulfénamide ("Santocure CBS" société Flexys). | | |

Les résultats montrent une amélioration significative du tanδₘₐₓ à 60°C après modification (*L*-cystine) d'un latex ayant un taux d'azote de 0.16% en poids.

## Revendications

1. Procédé de préparation d'un caoutchouc naturel modifié comprenant :
- une étape d'ajout en phase latex d'un agent de modification de formule (I) ainsi que ses sels, d'acide ou de base, organique ou minéral, ses isomères optiques ou géométriques et/ou ses solvates tels que les hydrates : 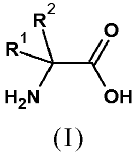 dans laquelle
R₁ et R₂, indépendamment l'un de l'autre, désignent un atome d'hydrogène, un groupement polaire choisi parmi amino, imino, nitrile, ammonium, imide, amide, hydrazo, azo, diazo, thio, hydroxyle, carboxyle, carbonyle, époxy, oxycarbonyle, des groupes hétérocycliques comportant un ou plusieurs atomes d'azote, des groupes hétérocycliques comportant un ou plusieurs atomes d'oxygène, des groupes comportant de l'étain, des groupes alkoxysilyles, les groupements polaires étant portés par une chaîne alkyle, linéaire ou ramifiée, saturée ou insaturée en C₁-C₁₈,
R₁ et R₂ ne pouvant designer ensemble un atome d'hydrogène;
à un caoutchouc naturel présentant un taux d'azote allant de 0 à 0,4% en poids par rapport au poids total du caoutchouc naturel séché,
la détermination du taux d'azote étant faite selon la norme Norme ISO 1656 :1996 basée sur la méthode de Kjeldahl,
- puis une étape de séchage.

2. Procédé selon la revendication 1, **caractérisé en ce que** l'agent de modification est choisi parmi l'arginine, l'asparagine, l'aspartate, la cystéine, la cystine, le glutamate, l'histidine, la lysine, la méthionine, la sélénocystéine, la sérine, la thréonine, le tryptophane, la tyrosine.

3. Procédé selon la revendication 1 ou 2, **caractérisé en ce que** l'agent de modification est choisi parmi l'arginine et la cystine.

4. Procédé selon l'une quelconque des revendications précédentes, **caractérisé en ce que** le taux d'agent de modification ajouté au caoutchouc va de 0.05 à 2% en poids par rapport au poids de caoutchouc naturel sec.

5. Procédé selon l'une quelconque des revendications précédentes, **caractérisé en ce que** le taux d'azote du caoutchouc naturel est d'au moins 0,05% et au plus de 0,3% en poids par rapport au poids total du caoutchouc naturel séché.

6. Caoutchouc naturel modifié obtenu par le procédé tel que défini à l'une quelconque des revendications précédentes.

7. Composition de caoutchouc à base
- d'au moins un caoutchouc naturel modifié tel que défini à la revendication 6,
- une ou plusieurs charges renforçantes et
- un système de réticulation.

8. Composition selon la revendication précédente, **caractérisée en ce qu'**elle comprend plus de 40 pce de caoutchouc naturel modifié ; plus préférentiellement encore le taux de caoutchouc naturel modifié est compris dans un domaine allant de 50 à 100 pce, en particulier dans un domaine allant de 70 à 100 pce.

9. Composition selon la revendication 7 ou 8, **caractérisée en ce que** la charge renforçante comprend majoritairement du noir de carbone.

10. Procédé de préparation d'une composition de caoutchouc pour pneumatique à base d'au moins un caoutchouc naturel modifié, une charge renforçante, et un système de réticulation, **caractérisé en ce qu'**il comprend les étapes suivantes :
- incorporer à un caoutchouc naturel modifié tel que défini à la revendication 6, la charge renforçante, en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite le système de réticulation chimique,
- malaxer le tout jusqu'à une température maximale inférieure à 120°C.

11. Produit fini ou semi-fini en caoutchouc, **caractérisé en ce qu'**il comprend une composition de caoutchouc telle que définie à l'une quelconque des revendications 7 à 9.

12. Pneumatique, **caractérisé en ce qu'**il comporte un produit fini ou semi-fini tel que défini à la revendication 11.

## Patentansprüche

1. Verfahren zur Herstellung eines modifizierten Naturkautschuks, umfassend:
- einen Schritt des Zusetzens eines Modifikationsmittels mit der Formel (I) in der Latexphase sowie seiner organischen oder mineralischen Säure- oder Basensalze, seiner optischen oder geometrischen Isomere und/oder seiner Solvate, wie Hydrate: 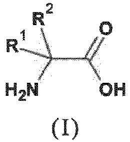 wobei
R₁ und R₂ voneinander unabhängig ein Wasserstoffatom, eine polare Gruppe, ausgewählt aus Amino, Imino, Nitril, Ammonium, Imid, Amid, Hydrazo, Azo, Diazo, Thio, Hydroxyl, Carboxyl, Carbonyl, Epoxy, Oxycarbonyl, heterocyclischen Gruppen mit einem oder mehreren Stickstoffatomen, heterocyclischen Gruppen mit einem oder mehreren Sauerstoffatomen, Gruppen, die Zinn umfassen, Akoxysilylgruppen, darstellen, wobei die polaren Gruppen von einer linearen oder verzweigten, gesättigten oder ungesättigten C₁-C₁₈-Alkylkette getragen werden,
R₁ und R₂ nicht gemeinsam ein Wasserstoffatom darstellen können;
zu einem Naturkautschuk mit einem Stickstoffgehalt von 0 bis 0,4 Gew.-% im Verhältnis zum Gesamtgewicht des getrockneten Naturkautschuks,
wobei die Bestimmung des Stickstoffgehalts gemäß der Norm ISO 1656:1996 auf der Basis der Kjeldahl-Methode durchgeführt wird;
- anschließend einen Trocknungsschritt.

2. Verfahren nach Anspruch 1,
**dadurch gekennzeichnet, dass** das Modifikationsmittel ausgewählt wird aus Arginin, Asparagin, Aspartam, Cystein, Cystin, Glutamat, Histidin, Lysin, Methionin, Selenocystein, Serin, Threonin, Tryptophan, Tyrosin.

3. Verfahren nach Anspruch 1 oder 2,
**dadurch gekennzeichnet, dass** das Modifikationsmittel ausgewählt wird aus Arginin und Cystin.

4. Verfahren nach einem der vorhergehenden Ansprüche,
**dadurch gekennzeichnet, dass** der Gehalt an Modifikationsmittel, das dem Kautschuk zugesetzt wird, von 0,05 bis 2 Gew.-% im Verhältnis zum Gewicht des getrockneten Naturkautschuks beträgt.

5. Verfahren nach einem der vorhergehenden Ansprüche, **dadurch gekennzeichnet, dass** der Stickstoffgehalt des Naturkautschuks mindestens 0,05 Gew.-% und höchstens 0,3 Gew.-% im Verhältnis zum Gesamtgewicht des getrockneten Naturkautschuks beträgt.

6. Modifizierter Naturkautschuk, welcher durch das Verfahren, wie in einem der vorhergehenden Ansprüche definiert, erhalten wird.

7. Kautschukzusammensetzung auf der Basis:
- mindestens eines modifizierten Naturkautschuks, wie in Anspruch 6 definiert,
- eines oder mehrerer Füllstoffe, und
- eines Vernetzungssystems.

8. Zusammensetzung nach dem vorhergehenden Anspruch,
**dadurch gekennzeichnet, dass** diese mehr als 40 pce modifizierten Naturkautschuk umfasst; wobei noch bevorzugter der Gehalt an modifiziertem Naturkautschuk in einem Bereich von 50 bis 100 pce, insbesondere in einem Bereich von 70 bis 100 pce, liegt.

9. Zusammensetzung nach Anspruch 7 oder 8,
**dadurch gekennzeichnet, dass** der Füllstoff mehrheitlich Ruß umfasst.

10. Verfahren zur Herstellung einer Kautschukzusammensetzung für Luftreifen auf der Basis mindestens eines modifizierten Naturkautschuks, eines Füllstoffs und eines Vernetzungssystems,
**dadurch gekennzeichnet, dass** dieses die folgenden Schritte umfasst:
- Einbringen, in den modifizierten Naturkautschuk, wie in Anspruch 6 definiert, des Füllstoffs durch thermomechanisches Mischen des Ganzen einmal oder mehrmals, bis eine maximale Temperatur zwischen 130°C und 200°C erreicht wird,
- Abkühlen des Ganzen auf eine Temperatur von weniger als 100°C,
- anschließendes Einbringen des chemischen Vernetzungssystems,
- Mischen des Ganzen bis auf eine maximale Temperatur von weniger als 120°C.

11. End- oder Halbfertigprodukt aus Kautschuk,
**dadurch gekennzeichnet, dass** dieses eine Kautschukzusammensetzung, wie in einem der Ansprüche 7 bis 9 definiert, umfasst.

12. Luftreifen,
**dadurch gekennzeichnet, dass** dieser ein End- oder Halbfertigprodukt, wie in Anspruch 11 definiert, umfasst.

## Claims

1. Process of preparing a modified natural rubber comprising:
- a step of adding, in a latex phase, a modifying agent of formula (I) and also organic or mineral, acid or base salts thereof, optical or geometric isomers thereof and/or solvates thereof such as hydrates: 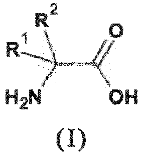 in which
R₁ and R₂, independently of one another, denote a hydrogen atom, a polar group selected from amino, imino, nitrile, ammonium, imide, amide, hydrazo, azo, diazo, thio, hydroxyl, carboxyl, carbonyl, epoxy or oxycarbonyl, heterocyclic groups comprising one or more nitrogen atoms, heterocyclic groups comprising one or more oxygen atoms, groups comprising tin, alkoxysilyl groups, the polar groups being borne by a linear or branched, saturated or unsaturated, C₁-C₁₈ alkyl chain,
it not being possible for R₁ and R₂ to both denote a hydrogen atom;
to a natural rubber having a nitrogen content ranging from 0 to 0.4% by weight relative to the total weight of the dried natural rubber,
the determination of the nitrogen content being carried out according to the standard ISO 1656:1996 based on the Kjeldahl method,
- followed by a step of drying.

2. Process according to Claim 1, **characterized in that** the modifying agent is selected from arginine, asparagine, aspartate, cysteine, cystine, glutamate, histidine, lysine, methionine, selenocysteine, serine, threonine, tryptophan and tyrosine.

3. Process according to Claim 1 or 2, **characterized in that** the modifying agent is selected from arginine and cystine.

4. Process according to any one of the preceding claims, **characterized in that** the content of modifying agent added to the rubber ranges from 0.05% to 2% by weight relative to the weight of dry natural rubber.

5. Process according to any one of the preceding claims, **characterized in that** the nitrogen content of the natural rubber is at least 0.05% and at most 0.3% by weight relative to the total weight of the dried natural rubber.

6. Modified natural rubber obtained by the process as defined in any one of the preceding claims.

7. Rubber composition based
- on at least one modified natural rubber as defined in Claim 6,
- one or more reinforcing fillers, and
- a crosslinking system.

8. Composition according to the preceding claim, **characterized in that** it comprises more than 40 phr of modified natural rubber; more preferentially still the content of modified natural rubber is within a range extending from 50 to 100 phr, in particular within a range extending from 70 to 100 phr.

9. Composition according to Claim 7 or 8, **characterized in that** the reinforcing filler predominantly comprises carbon black.

10. Process for preparing a rubber composition for a tyre based on at least one modified natural rubber, a reinforcing filler, and a crosslinking system, **characterized in that** it comprises the following steps:
- incorporating into a modified natural rubber as defined in Claim 6, the reinforcing filler, everything being kneaded thermomechanically, in one or more steps, until a maximum temperature of between 130°C and 200°C is reached,
- cooling the combined mixture to a temperature below 100°C,
- subsequently incorporating the chemical crosslinking system,
- kneading everything up to a maximum temperature of below 120°C.

11. Finished or semi-finished rubber product, **characterized in that** it comprises a rubber composition as defined in any one of Claims 7 to 9.

12. Tyre, **characterized in that** it comprises a finished or semi-finished product as defined in Claim 11.
